# EUROPEAN PATENT APPLICATION

(11) **EP 2 634 558 A2**
(43) Date of publication of application: **04.09.2013**
(21) Application number: 11821824.7
(22) Date of filing: 30.08.2011
(51) Int. Cl.: G01N 21/17, G01B 9/02, G01B 11/24

(54) **SHAPE MEASUREMENT DEVICE AND SHAPE MEASUREMENT METHOD**

(30) Priority: 03.09.2010 JP 2010197206; 31.08.2010 JP 2010193465
(71) Applicant: National University Corporation Nagaoka University of Technology, Nagaoka Niigata 940-2188 (JP)
(72) Inventor: SHIODA Tatsutoshi, Nagaoka-shi Niigata 940-2188 (JP)
(74) Representative: Viering, Jentschura & Partner
(86) International application number: PCT/JP2011/069654
(87) International publication number: WO 2012/029809

(57) **Abstract**

The shape measurement device 1 comprises a light source 11,a measuring beam illumination system 13, a reference comb light separator 14, an optical multiplexer 15 and photodetector 16. The reference comb light separator 14 enters with a broadband light, and it separates in a reference comb light with broadband light. The frequency interval of he reference comb light changes continually depending on a size of Y-coordinate level in the image formation point, when the emission direction is assumed Z-axis direction. X-axis means a virtual cutout line for the measuring object, and Y-coordinate means depth for measuring. The interference image emerging in the detective surface is a tomogram for the measurement substantially. Using the reference comb light, the two-dimensional dislocation of depth direction is measured, wherein the dynamic range is extremely wide. When an emission direction is assumed Z-axis direction, a frequency interval of a reference comb light changes depending on size of Y-coordinate level in image formation point continually.

## Description

### FIELD OF THE INVENTION

The present invention relates to a shape measurement technology comprising a broadband light source, wherein a distance measurement is implemented by the shape measurement technology without using any movable mechanism and without the practice of Fourier transform.
Specifically, the present invention relates to a shape measurement device and a shape measurement method that can measure a one-dimensional tomogram or a two-dimensional tomogram of a depth direction.
In the present invention, a comb light that frequency interval changes depending on value of Y-coordinate (an emission direction is the same as the Z-axis direction) of an image formation point is used as a reference light.

### BACKGROUND ART

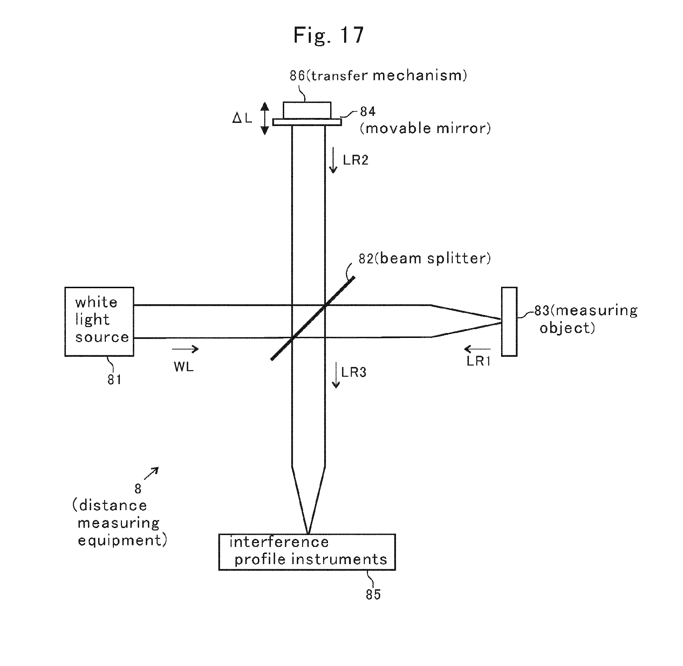

For example, a distance measuring device of Michelson type (interferometer) is used for measuring a surface shape of an object or an internal structure of an optically transparent object (cf. non-patent document 1). As the distance measuring device of Michelson type, some device using a white light source is known as shown in FIG. 17.
In a distance measuring device 8 of FIG. 17 a white light WL from a white light source 81 transmits a beam splitter 82, and the transmitted light is irradiated to measuring object 83.
On the other hand, the white light WL is reflected by the beam splitter 82, and it is irradiated to a movable mirror 84.

A reflected light LR1 from the measuring object 83 is reflected by the beam splitter 82.
A reflected light LR2 from the movable mirror 84 transmits the beam splitter 82.
These reflected lights LR1, LR2 are thereby synthesized.
The synthesized light (synthetic light LR3) is entered to the interference profile instruments 85.
An interference profile (a white light) is measured by an interference profile instrument 85.

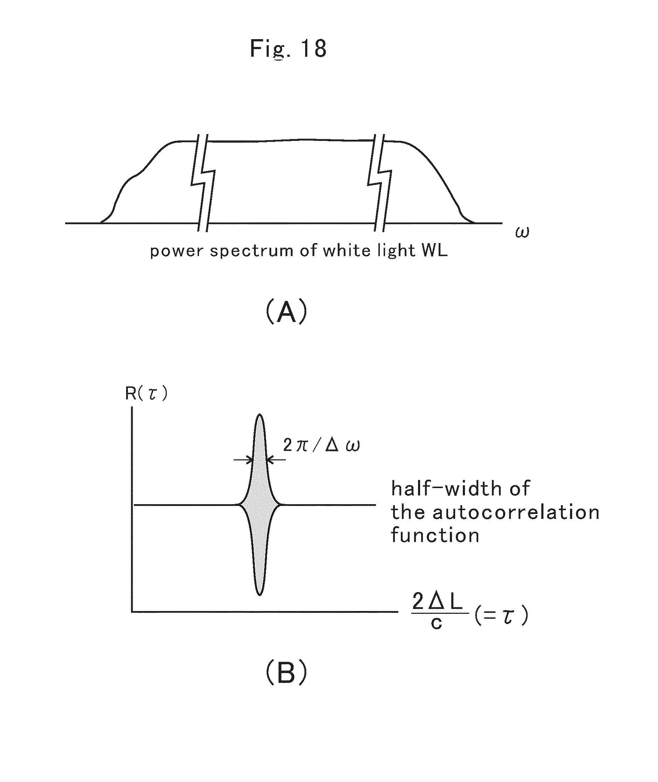

In FIG. 17, a movable mirror 84 is moved parallel to an optical axis of incident radiation by a transfer mechanism 86.
When the movable mirror 84 moves, a distance from the measuring object 83 to the interference profile instruments 85 and a distance from the movable mirror 84 to the interference profile instruments 85 change respectively.
When the distance from measuring object 83 to the interference profile instruments 85 and the distance from the movable mirror 84 to interference profile instruments 85 are equal, the interference is generated.
This interference is connected with inverse Fourier transform of a power spectrum of the white light WL that the white light source 81 shown in FIG. 18 (A) emits.

As shown in FIG. 18 (B), a width of an interference wave form is inversely proportional with a bandwidth (Δω in FIG. 18 (B)) of the white light source 81.
Because the white light source 81 is used, the detection resolving power rises.
The synthetic light LR 3 is the autocorrelation function of the white light source that the move distance (ΔL) of movable mirror 84 is one of the variables.
(2Π/Δω) is a half-width of the autocorrelation function in FIG. 18 (B).

### [non-patent document 1]

Optics Letters, Vol. 25, Issue 2, pp. 111-113 (2000) "Spectroscopic optical coherence tomography" U. Morgner etc.

### SUMMARY OF THE INVENTION

### PROBLEM TO BE SOLVED BY THE INVENTION

In the distance measuring device 8 shown in FIG. 17, the white light is used. Thus, the measurement of a high resolution is possible.
However, distance measuring device 8 cannot measure the distance in a short time because movable mirror 84 is used.
Also, as for the distance measuring device 8, downsizing is impossible because the movable mirror 84 is used.
In addition, as for the distance measuring device 8, some mechanical maintenance of a movable mechanism is required.
A dynamic range of the distance measuring device 8 is extremely short, it is approximately 1 cm or less.

An object of the invention is to measure a one-dimensional tomogram of a depth direction or a two-dimensional tomogram of the depth direction. In the present invention, a comb light is used as a reference light. As for this comb light, a frequency interval changes depending on size of Y-coordinate (an emission direction is a Z-axis direction) in an image formation point continuously.
Another object of the invention is to measure a one-dimensional tomogram of a depth direction or a two-dimensional tomogram of the depth direction that dynamic range is wide.

### MEANS TO SOLVE THE PROBLEM

A shape measurement device and a shape measurement method of the present invention assume the following subject matter.

### (1)

A shape measurement device that an interference image emerging in a detective surface of a detecting element is a two-dimensional tomogram of a measuring object comprising:
a light source generating a broadband light;
a measuring light irradiation system which irradiates a measuring object with a broadband light as a measuring light;
a reference comb light separator which enters the broadband light and emits a reference comb light separated from the broadband light, wherein a frequency interval of the reference comb light changes depending on a size of Y-coordinate level in a image formation point continuously and the reference comb light has a width in X-axis direction;
a light synthesizer synthesizing the reference comb light emitted by the reflected light reflected and the reference comb light separator by the measuring object, or synthesizing the transmitted light penetrating the measuring object and the reference comb light emitted by the reference comb light separator;
a photo detector which receives a synthetic light from the optical multiplexer and detects an optical power in the detective surface;
wherein X-axis is defined as a virtual cutout line of a measurement object, a Y-coordinate is defined as a depth of cutting and a positive direction of a Z-axis is defined as an emission direction of a measurement light.

### (2)

A shape measurement device according to (1) comprising:
a modulator which performs spatial distance modulation of a reference comb light on an optical path of a reference comb light.

### (3)

A shape measurement device according to (1) or (2):
wherein the photo detector superposes the interference images in different depth regions in on the detective surface, and acquires the superimposed interference image.

### (4)

A shape measurement device according to (1)-(3):
Wherein an optical path length of the reference comb light or the optical path length of the measuring light is changed one time or several times, thereby the interference image moves for a short distance, by detecting the moved distance the interference images of different depth regions are separated.

### (5)

A shape measurement device according to (1)-(4):
wherein the reference comb light separator is optical resonator.

### (6)

A shape measurement device according to (5):
wherein the optical resonator is Fabry-Perot etalon resonator.(FPER)

### (7)

A shape measurement device that an interference image emerging in a detective surface of a detecting element is a one-dimensional tomogram of a measuring object comprising: a light source generating broadband light;
a measuring light irradiation system which irradiates a measuring object with a broadband light as a measuring light;
a reference comb light separator which enters the broadband light and emits a reference comb light separated from the broadband light, wherein a frequency interval of the reference comb light changes depending on a size of Y-coordinate level in a image formation point continuously and the reference comb light has a width in X-axis direction;
a light synthesizer synthesizing the reference comb light emitted by the reflected light reflected and the reference comb light separator by the measuring object, or synthesizing the transmitted light penetrating the measuring object and the reference comb light emitted by the reference comb light separator;
a photo detector which receives a synthetic light from the optical multiplexer and detects an optical power in the detective surface;
wherein a Y-coordinate is defined as a depth of cutting and a positive direction of a Z-axis is defined as an emission direction of a measurement light.

### (8)

A shape measurement device according to (7) comprising:
a photo detector which receivess a synthetic light from the optical multiplexer and detects an optical power in the detective surface;
wherein X-axis is defined as a virtual cutout line of a measurement object, a Y-coordinate is defined as a depth of cutting and a positive direction of a Z-axis is defined as an emission direction of a measurement light.

### (9)

A shape measurement device according to (7) or (8):
wherein the photo detector superposes the interference line images in different depth regions in on the detective surface, and acquires the superimposed interference image.

### (10)

A shape measurement device described according to (7)-(9) :
wherein an optical path length of the reference com light or the optical path length of the measuring light is changed one time or several times, thereby the interference line image moves for a short distance, by detecting the moved distance the interference line images of different depth regions are separated.

### (11)

A shape measurement according to (7)-(10):
wherein the reference comb light separator is optical resonator.

### (12)

A shape measurement device described in (11):
wherein the optical resonator is Fabry-Perot etalon resonator.

### (13)

A shape measurement method that an interference image emerging in a detective surface of a detecting element is a two-dimensional tomogram of a measuring object comprising the steps of:
(a) irradiating a broadband light as measuring light to the measuring object;
(b) entering a broadband light, separating a reference comb light and emitting the reference comb light, wherein a frequency interval of the reference comb light changes depending on a size of Y-coordinate level in a image formation point continuously and the reference comb light has a width in X-axis direction;(
(c) synthesizing a reflected light reflected by the measuring object or a transmitted light penetrating the measuring object and the reference comb light;
(d) detecting an optical power in the detective surface;
wherein X-axis is defined as a virtual cutout line of a measurement object, a Y-coordinate is defined as a depth of cutting and a positive direction of a Z-axis is defined as an emission direction of a measurement light.

### (14)

A shape measurement method defined by (13) comprising:
(e) modulating spatial distance of a reference comb light.

### (15)

A shape measurement method defined by (13) or (14), wherein the interference images are superposed in different depth regions in on the detective surface, and the superimposed interference image is acquired.

### (16)

A shape measurement method defined by (13)-(15):
wherein an optical path length of the reference comb light or the optical path length of the measuring light is changed one time or several times, thereby the interference image moves for a short distance, by detecting the moved distance the interference images of different depth regions are separated.

### (17)

A shape measurement method that an interference line image emerging in a detective surface of a detecting element is a one-dimensional tomogram of a measuring object comprising the steps of:
(a) irradiating a broadband light as measuring light to the measuring object;
(b) entering the broadband light, separating a reference comb light and emitting the reference comb light, wherein a frequency interval of the reference comb light changes depending on a size of Y-coordinate level in a image formation point continuously;
(c) synthesizing a reflected light reflected by the measuring object or a transmitted light penetrating the measuring object and the reference comb light;
(d) detecting an optical power in the detective surface;
   wherein a Y-coordinate is defined as a depth of cutting and a positive direction of a Z-axis is defined as an emission direction of a measurement light.

### (18)

A shape measurement method defined by (17) comprising:
(e) modulating spatial distance of a reference comb light.

### (19)

A shape measurement method defined by (18),
wherein the interference images are superposed in different depth regions in on the detective surface, and the superimposed interference image is acquired.

### (20)

A shape measurement method defined by (17)-(19):
wherein an optical path length of the reference comb light or the optical path length of the measuring light is changed one time or several times, thereby the interference image moves for a short distance, by detecting the moved distance the interference images of different depth regions are separated.

### EFFECT OF THE INVENTION

Interference images of different depth regions are superimposed on the detective surface. Thus, a measuring range (a dynamic range) is extremely extended.

### BRIEF DESCRIPTION OF DRAWINGS

### [FIG. 1]

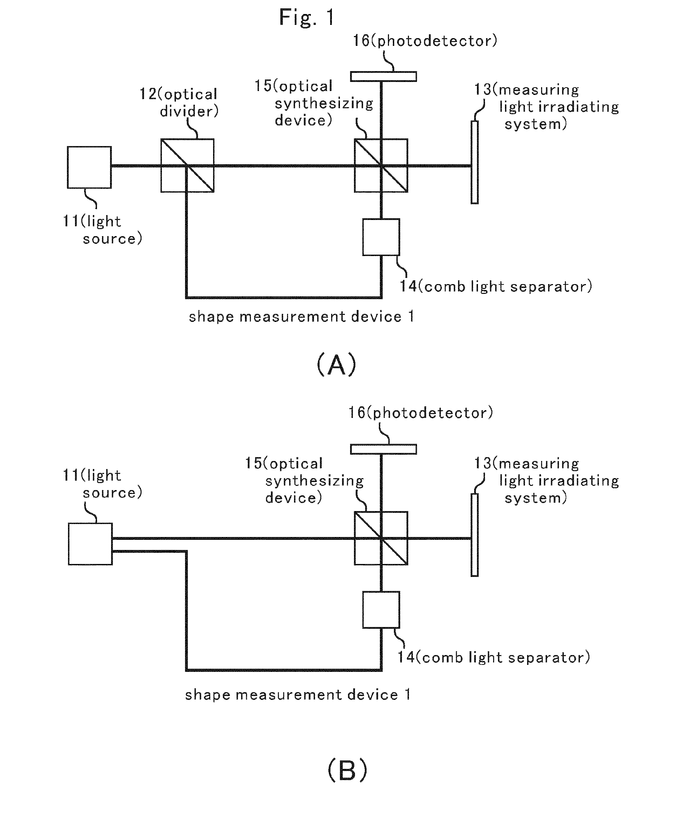

FIG. 1 (A) and FIG. 1 (B) show an embodiment of the present invention, wherein a reflected light from a measuring object is detected.

FIG. 1 (A) is a figure showing an example using an optical divider.

FIG. 1 (B) is a figure showing another example not using an optical divider.

### [FIG. 2]

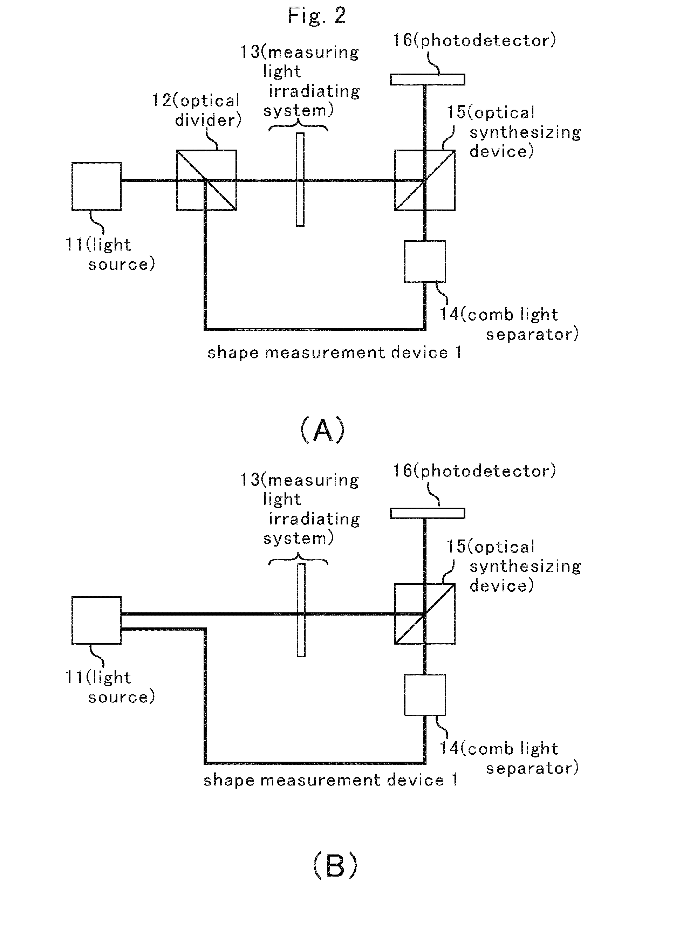

FIG. 2 (A) and FIG. 2 (B) are figures which show an embodiment of the present invention detecting a transmitted light through a measurement object.

FIG. 2 (A) is a figure showing an example using an optical divider.

FIG. 2 (B) is a figure showing another example which does not use an optical divider.

### [FIG. 3]

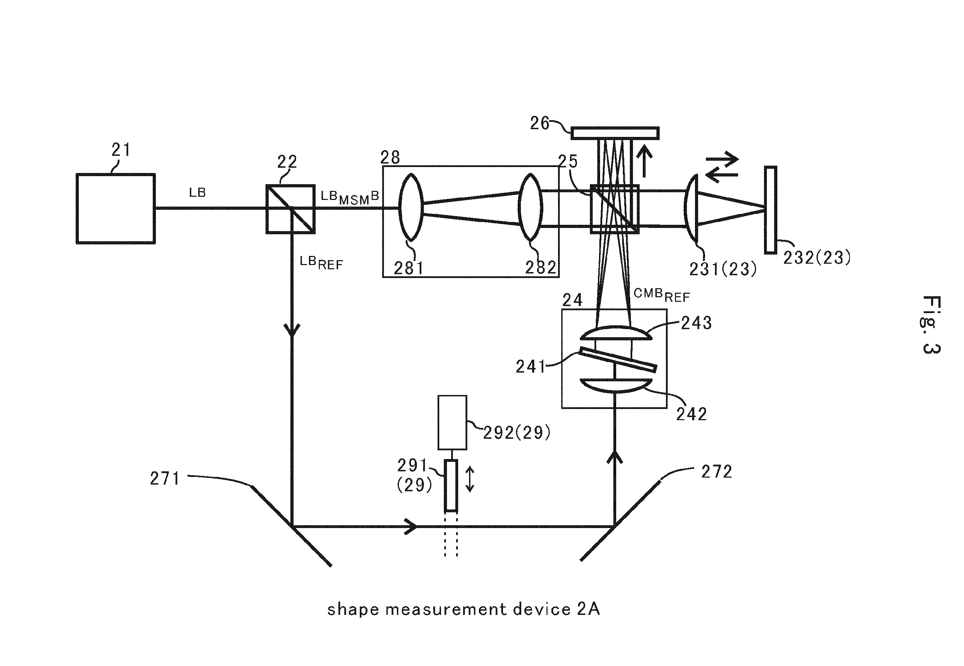

FIG. 3 is a figure corresponding to FIG. 1 (A).

FIG. 3 shows a shape measurement device measuring a two-dimensional tomogram of a depth direction.

### [FIG. 4]

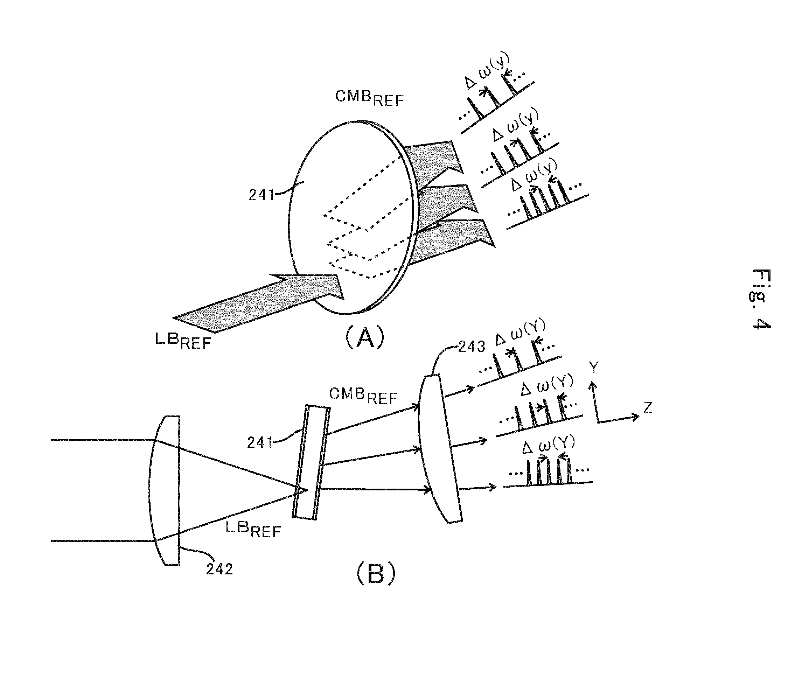

FIG. 4 (A) and FIG. 4 (B) are operation explanatory drawings of Fabry-Perot etalon resonator (FPER) as used herein.

### [FIG. 5]

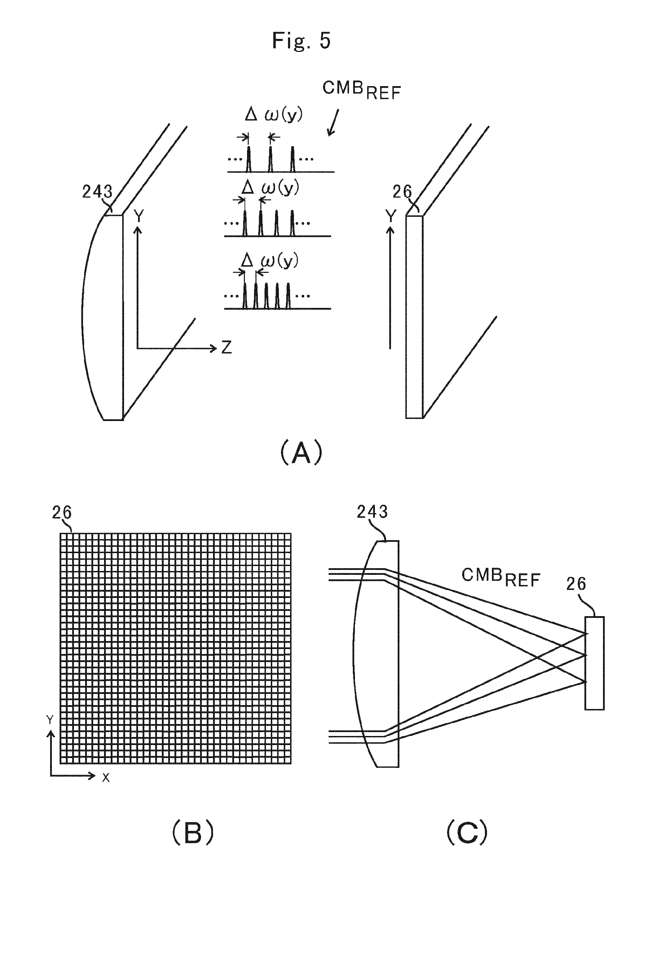

FIG. 5 is an explanatory drawing of an emission light of Fabry-Perot etalon resonator (FPER).

### [FIG. 6]

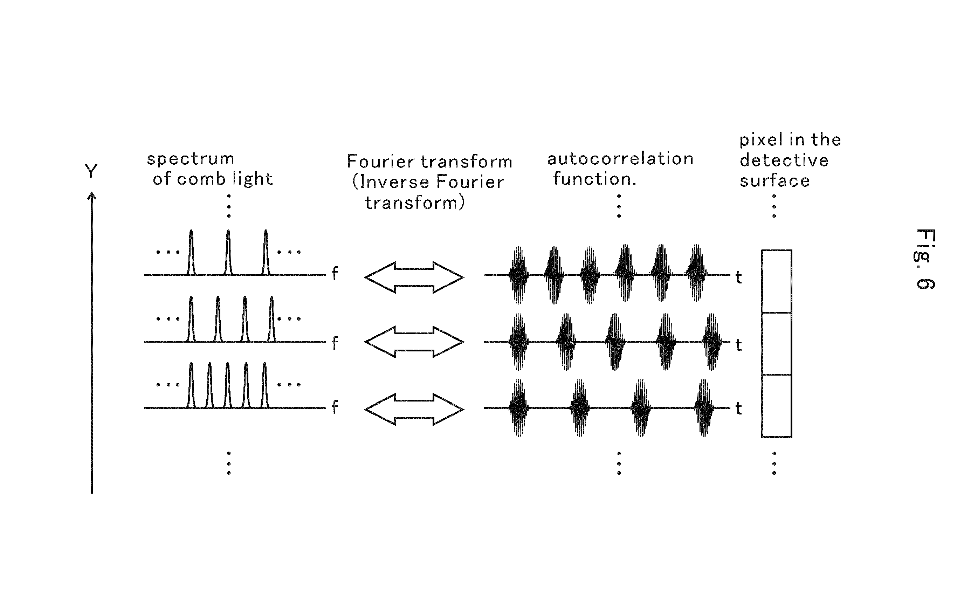

FIG. 6 is a diagram showing relations of Fourier transform of a delta function line representing comb light and autocorrelation function.

### [FIG. 7]

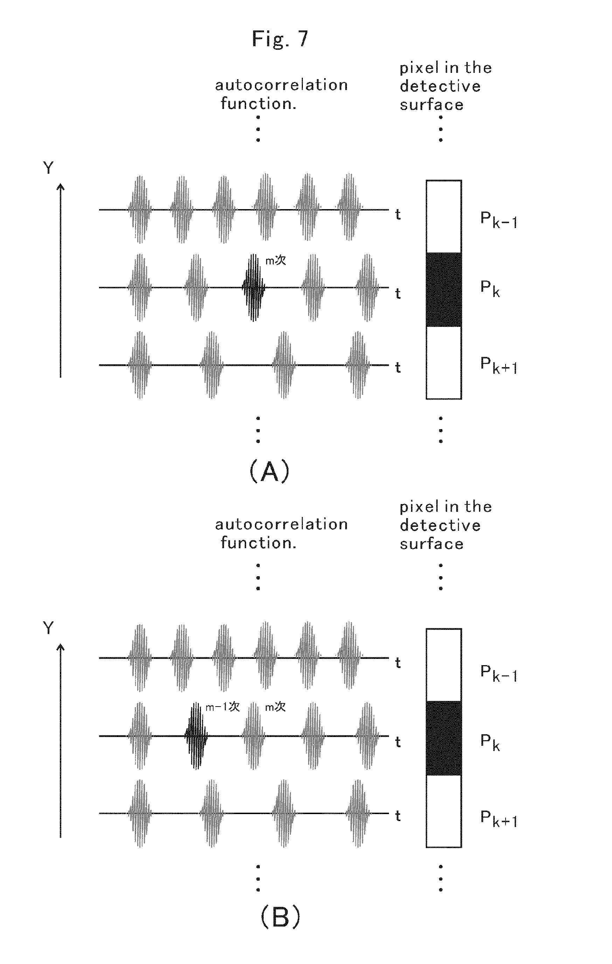

FIG. 7 (A) and FIG. 7 (B) are figures showing relations between pixel location in a detective surface and an autocorrelation function when interference generated in a different order (that is depth different).

### [FIG. 8]

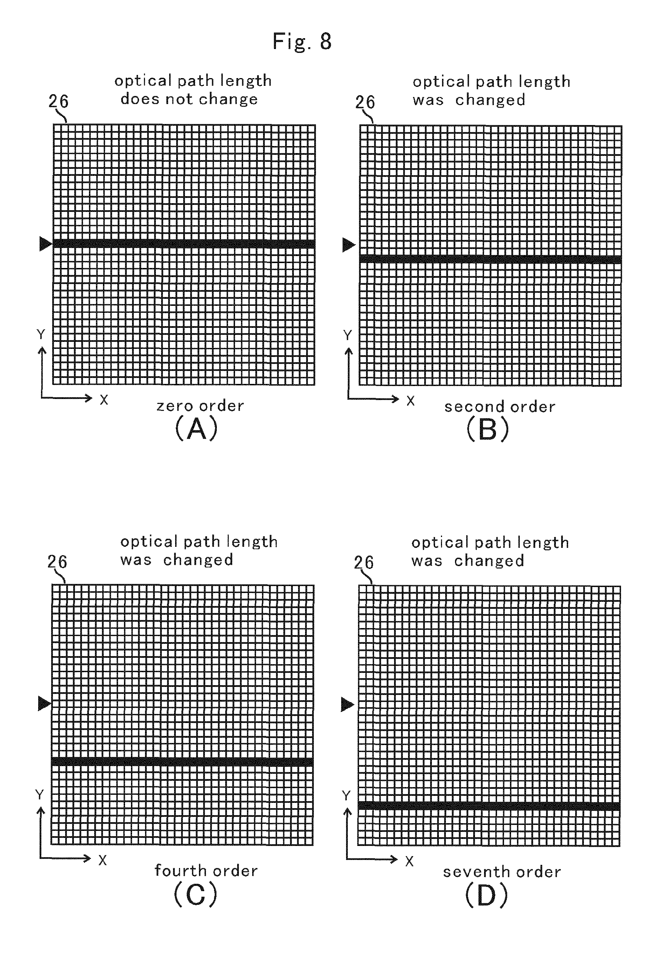

FIG. 8 (A) is a figure showing a position of a sample mirror in a detective surface when an optical path does not change.

FIG. 8 (B) is a figure showing an interference image appeared in a detective surface when an optical path changed. In FIG. 8 (B), an interference image appearing on a detective surface moves a distance corresponding to 2 pixels.

FIG. 8 (C) is a figure showing an interference image appeared in a detective surface when an optical path does not change. In FIG. 8 (c), an interference line appearing on a detective surface moves a distance corresponding to 8 pixels.

FIG. 8 (D) is a figure showing an interference image appeared in a detective surface when an optical path changed. In FIG. 8 (B), an interference line appearing on a detective surface moves a distance corresponding to 7 pixels.

### [FIG. 9]

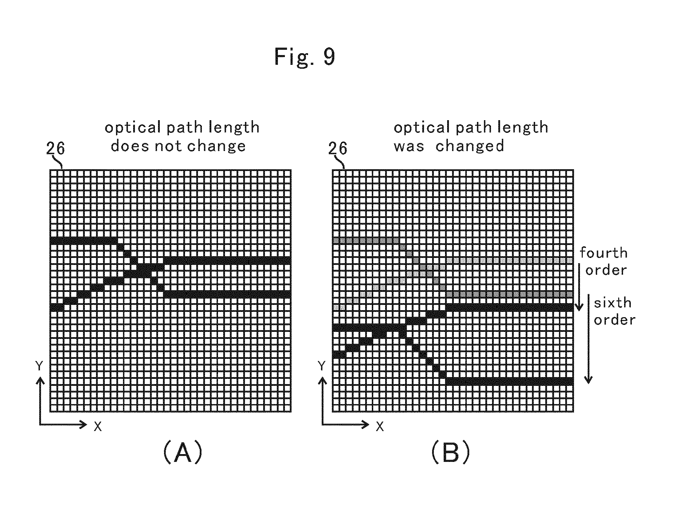

FIG. 9(A) and FIG. 9(B) are figures showing an example in which interference images of different depth regions are superimposed on a detective surface of a photo detector.

FIG. 9 (A) shows an example in which a glass plate is not inserted into a reference light path.

FIG. 9 (B) shows an example in which a glass plate is inserted into a reference light path.

### [FIG. 10]

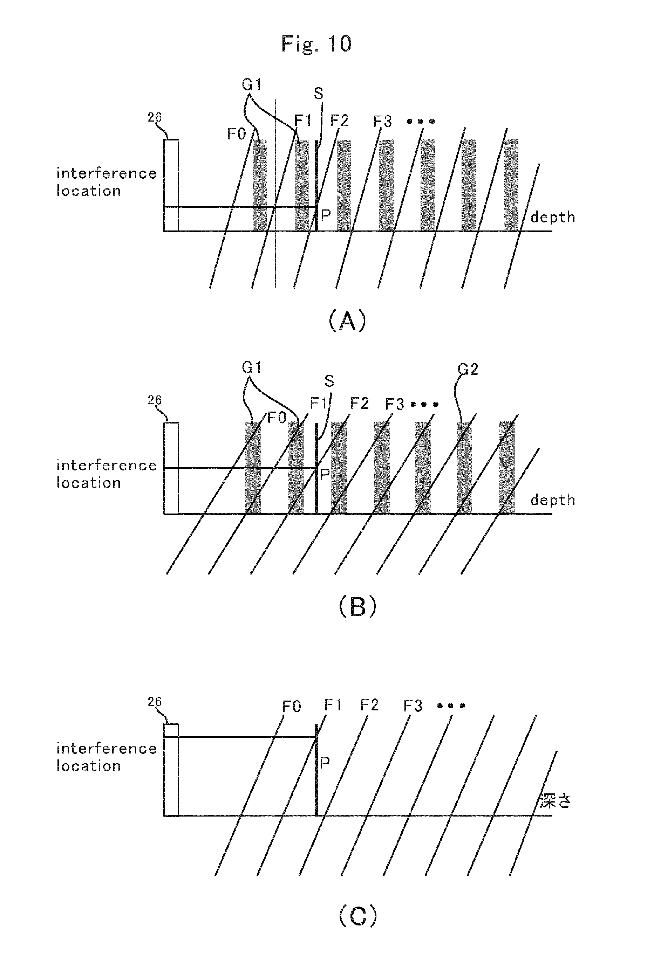

FIG. 10 (A) is a figure showing a problem which occurred by using FPER. FIG. 10 (A) shows a region (a non-feeling region) being immeasurable.

FIG. 10 (B) is a figure showing a problem which occurred by using FPER.

FIG. 10 (B) shows a region where interference lights of a different order appear in a detective surface from the same depth at the same time.

FIG. 10 (C) is a figure showing a technique that the problem of (A) or (B) does not generate.

### [FIG. 11]

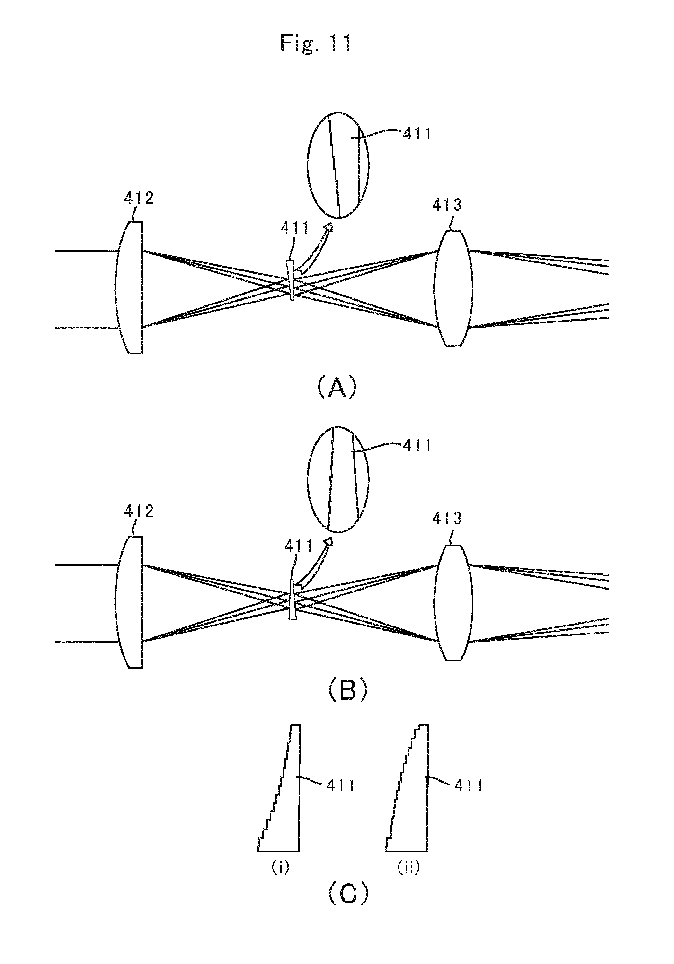

FIG. 11 (A) and FIG. 11 (B) are explanatory drawings of a modulator modulating spatial distance.

FIG. 11 (C) shows two figures showing optical path modulation elements. In each optical path modulation element, an order property of an interference light is nonlinear.

### [FIG. 12]

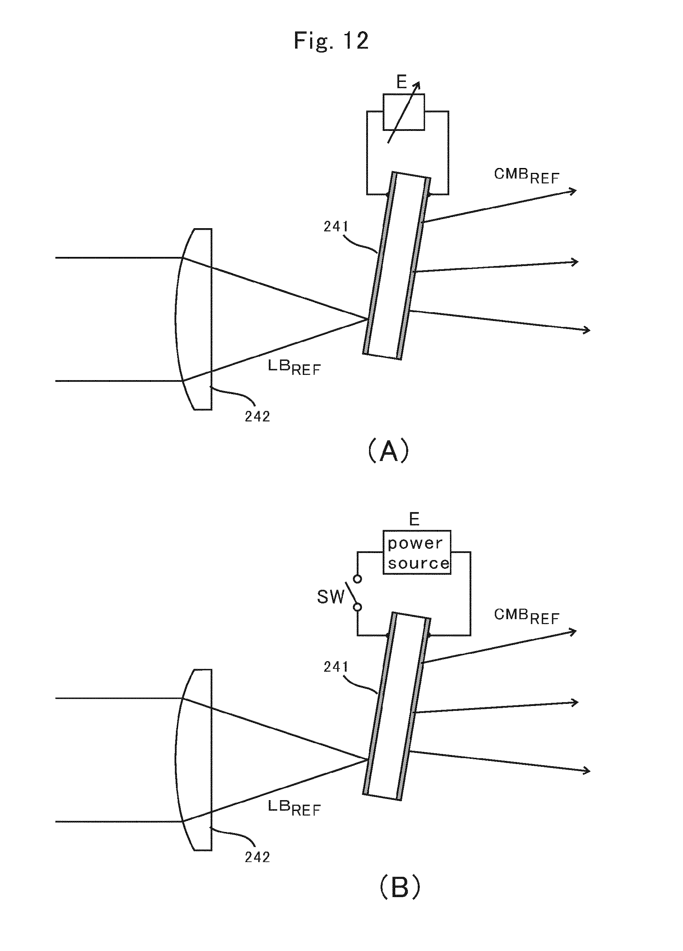

FIG. 12 (A) and FIG. 12 (B) are figures showing FPER. An optical path length changes by changing a voltage to apply to both surfaces of FPER.

### [FIG. 13]

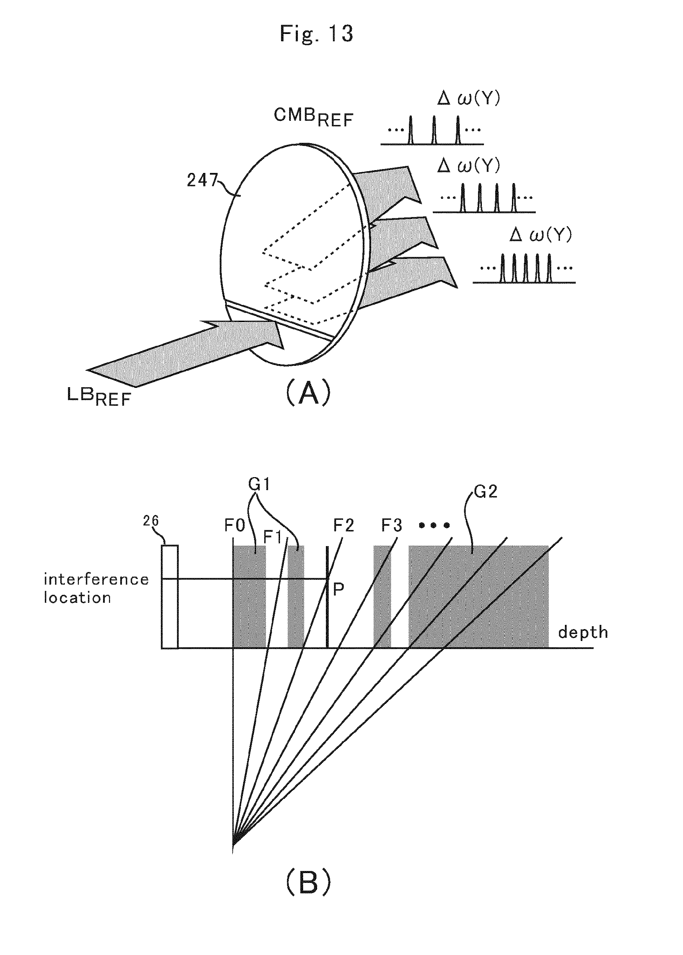

FIG. 13 (A) is a figure showing an example using VIPA as an optical resonator.

FIG. 13 (B) shows a characteristic of a depth region when VIPA was used.

FIG. 13 (B) shows regions becoming immeasurable (non-feeling region) and regions where the same reflect object appears in a detective surface as interference lights of a different order at the same time.

### [FIG. 14]

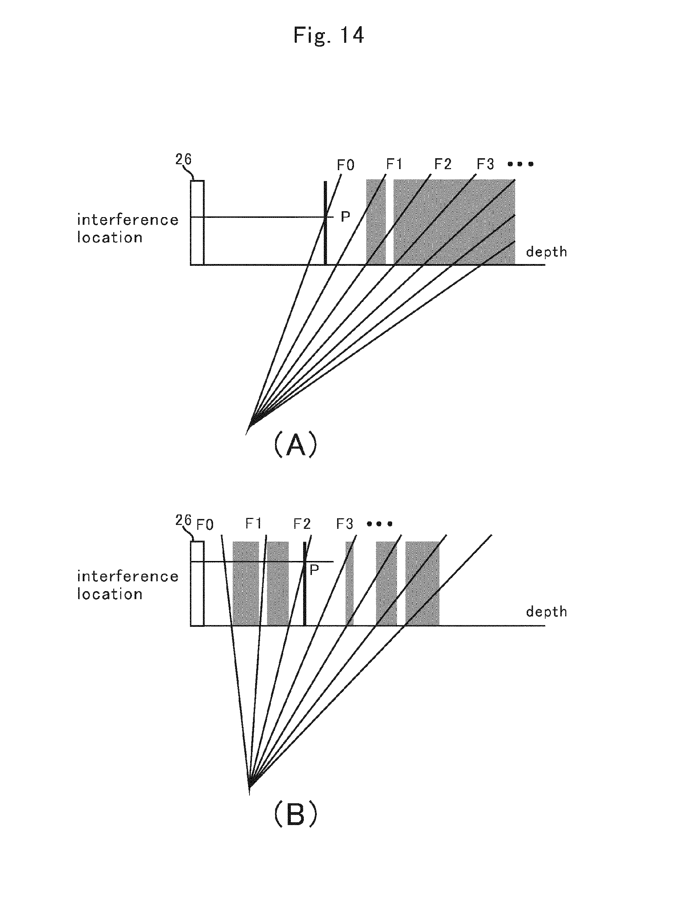

FIG. 14 (A) is an explanatory drawing of regions becoming immeasurable (non-feeling region).

FIG. 14 (B) is an explanatory drawing of regions where the same reflect object appears in a detective surface as interference lights of a different order at the same time.

### [FIG. 15]

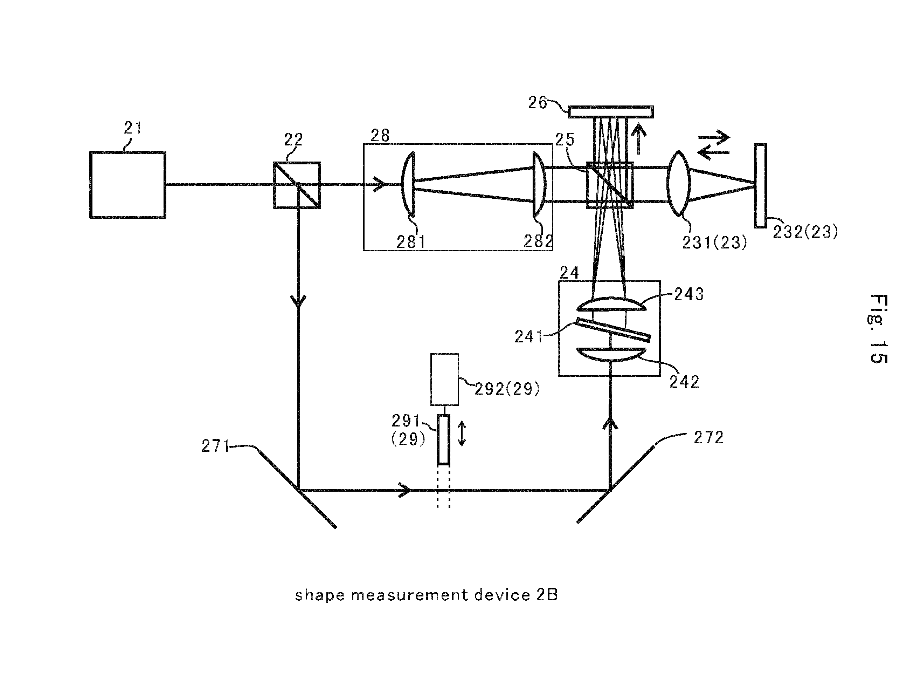

FIG. 15 is an explanatory drawing showing another embodiment of the shape measurement device of the present invention.

### [FIG. 16]

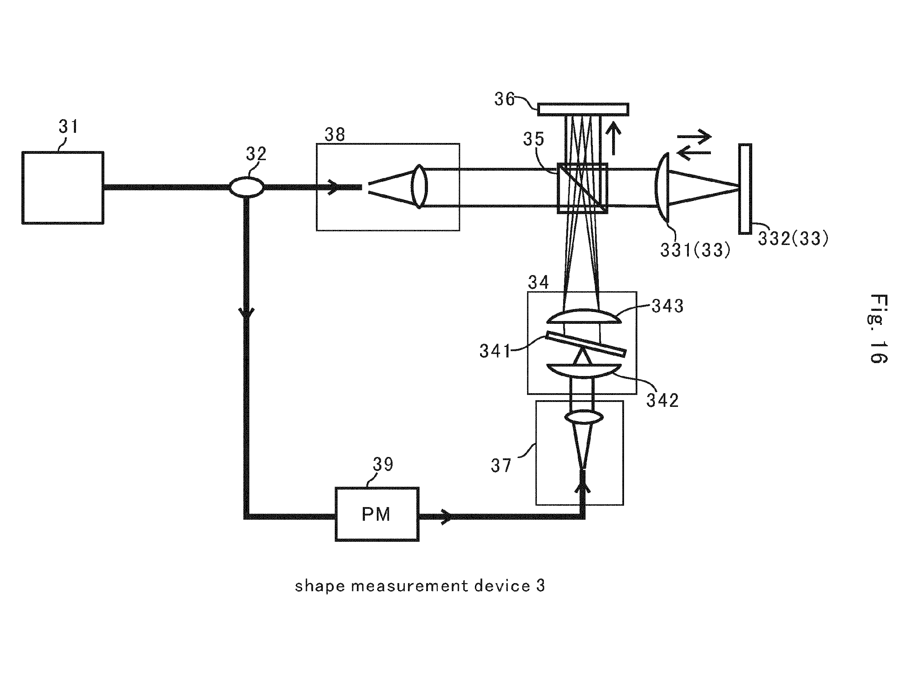

FIG. 16 is an explanatory drawing shown the other embodiment of the shape measurement device of the present invention.

In a shape measurement device of FIG. 16, a part of an optical path is constructed by an optical fiber system.

### [FIG. 17]

FIG. 17 is a figure showing a distance measuring device of conventional Michelson type. In FIG. 17, a white light source is used.

### [FIG. 18]

FIG. 18 (A) is a figure showing a power spectrum of a light source in an interferometer of FIG. 17.

FIG. 18 (B) is a figure showing interference wave form.

### FORM TO CARRY OUT INVENTION

A first embodiment of a shape measurement device of the present invention is described by drawings. (FIG. 1 (A), (B) and FIG. 2 (A), (B))
FIG. 1 (A) and (B) show the examples detecting reflected light from a measuring object, respectively.
FIG. 2 (A) and FIG. 2 (B) show the examples detecting transmitted light penetrating a measuring object, respectively.

FIG. 1 (A) and FIG. 1 (B) are block diagrams of a shape measurement devices 1.
In these shape measurement devices 1, a two-dimensional tomogram of a depth direction or a one-dimension tomogram of the depth direction is measured based on a measuring light reflected by a measuring object.
In FIG. 1 (A), the shape measurement device 1 comprises a light source 11, an optical divider 12, a measuring light irradiating system 13, a reference comb light separator 14, an optical multiplexer 15 and a photo detector 16.
The light source 11 generates a broadband light, for example, a white light or a supercontinuum light.
The optical divider 12 branches a light from the light source 11 into a measuring light and a reference light.
In FIG. 1 (B), the optical divider 12 shown in FIG. 1 (A) may be not comprised.
In FIG. 1 (B), the measuring light and the reference light are irradiated directly from the light source 11.

The measuring light irradiating system 13 irradiates the measuring object with broadband light.
In a measuring light irradiation system 13, a broadband light can be formed in a wedge form.
Because the broadband light is formed in a wedge form, the broadband light is irradiated to a shape of a line on the measuring object.
The two-dimensional tomogram of the depth direction is measured by irradiating to the shape of one line.
Also, in the measuring light irradiation system 13, the broadband light can be formed in a drill form.
Because the broadband light is formed in the drill form, the broadband light is irradiated in a point on the measuring object.
The one-dimensional tomogram of the depth direction is measured by irradiating in a point.

As the reference comb light separator 14, an optical resonator can be used.
As this optical resonator Fabry-Perot etalon resonator (FPER) can be used.
Also, Virtually Imaged Phased Array (VIPA) can be used. The broadband light from the light source 11 is irradiated to the reference comb light separator 14.
The reference comb light separator 14 generates a reference comb light.
The reference comb light consists of combs that a frequency interval is Δω(Y).
The emission direction of a reference comb light is assumed the Z-axis direction.
The frequency interval changes depending on a value of Y-coordinate in an image formation point continuously.

When the two-dimensional tomogram of the depth direction is measured, the reference comb light must have a width in the X-axis direction.
When the one-dimensional tomogram of the depth direction is measured, the reference comb light does not have to have a width in the X-axis direction (of course it may have a width).
The optical synthesizing device 15 synthesizes a reflected light reflected by the measuring object and a reference comb light from the reference comb light separator.
The photo detector 16 can be comprised from CCD.
The photo detector 16 receives a synthetic light from the optical synthesizing device 15, and detects an optical power.
When the two-dimensional tomogram of a depth direction is measured, the photo detector 16 detects an optical power in the detective surface (two-dimensional sensor).
When the one-dimensional tomogram of a depth direction is measured, the photo detector 16 can be comprised from a line sensor.
The photo detector 16 detects the optical power on the line sensor which is provided along Y-axis (provided parallel to Y-axis).
When the two-dimensional tomogram is measured in the shape measurement device 1 of Fig. 1 (A) or (B), for example, a line segment on X-axis corresponds to a virtual cutout line for the measuring object, and Y-coordinate of Y-axis corresponds to depth.
The shape measurement device 1 can generate a two-dimensional tomogram of the measuring object from the interference image appearing on the detective surface.

FIG. 2 (A) and FIG. 2 (B) show examples in which the transmitted light (measuring light) transmitting the measuring object is detected as previously described.
FIG. 2 (A) and FIG. 2 (B) show block diagrams of the shape measurement device 1, wherein a measuring light transmits a measuring object.
FIG. 2 (A) shows the shape measurement device 1 measuring the two-dimensional tomogram of a depth direction.
FIG. 2 (B) shows the shape measurement device 1 measuring one-dimensional tomogram of a depth direction.

Like the shape measurement device 1 of FIG. 1 (A), the shape measurement device 1 of FIG. 2 (A) comprises a light source 11, an optical divider 12, a measuring light irradiation system 13, a reference comb light separator 14, a optical synthesizing device 15 and a photo detector 16.
In FIG. 1 (A), measuring light irradiation system 13 is provided outside the optical synthesizing device 15 (to a rear of the optical synthesizing device 15).
However, in FIG. 2 (A), the measuring light irradiation system 13 is provided between the optical divider 12 and the optical synthesizing device 15.

### Optical synthesizing device

In FIG. 2 (A), the optical path length of the measuring light is different from the optical path length of the reference light.
The optical path length of reference light is a length of the optical path from the light source 11 to the photo detector 16 via the reference comb light separator 14.
The optical path length of measuring light is a length of the optical path from the light source 11 to the photo detector 16, wherein the path goes via the measuring object and the optical synthesizing device 15.
The optical path of reference light is usually about the same with the optical path of measuring light.
As shown in FIG. 2 (B), when the measuring light and the reference light are emitted directly from the light source 11, the optical divider 12 does not need to comprise.

FIG. 3 is a figure corresponding to FIG. 1 (A).
In FIG. 3, a two-dimensional tomogram of a depth direction is measured by a shape measurement device 2A.
In FIG. 3, the shape measurement device 2A comprises a light source 21, an optical divider 22, a measuring light irradiation system 23, a reference comb light separator 24, a optical synthesizing device 25, a photo detector 26, a mirror 271,272, a beam diameter adjustment system 28 and an optical path length modifier 29.
The measuring light irradiation system 23 comprises a cylindrical lens 231 and a measuring object 232.
The reference comb light separator 24 comprises Fabry-Perot etalon resonator (FPER) 241 and cylindrical lenses 242,243.
The beam diameter adjustment system 28 comprises spherical lenses 281,282.
The optical path length modifier 29 comprises the glass plate 291 and the glass plate transfer device 292.

The light source 21 is a super luminescence diode.
The laser beam LB from the light source 21 is branched into the reference light LBREF and the measuring light LBMSR by the optical divider 22.
The reference light LBREF enters to the reference comb light separator 24 via the mirror 271, the optical path length modifier 29 and the mirror 272.
The reference comb light separator 24 emits a reference comb light CMBREF.
The optical path modifier 29 can provide the glass plate 291 on the optical path. However, as for the optical path modifier 29, the glass plate 291 can be omitted.

On the other hand, the measuring light LBMSR is entered to the beam diameter adjustment system 28.
The beam diameter of the measuring light LBMSR is adjusted by the spherical lens 281,282.
The measuring light LBMSR of which the beam diameter was adjusted is irradiated to the measuring object 232 via the optical synthesizing device 25 and the cylindrical lens 231.
The reference comb light CMBREF from the reference comb light separator 24 and the reflected light from the measuring object 232 are synthesized by the optical synthesizing device 25.
The Synthesized light is irradiated the photo detector 26 with.

A constitution and an operation of the shape measurement device 2A are described in detail as follows.
The reference comb light separator 24 comprises the FPER 241 and the cylindrical lenses 242, 243 as previously described.
FIG. 4 (A) shows FPER 241.
FPER 241 is formed of a quartz glass substrate.
In this embodiment, the gold is deposited onto an exit face of FPER 241 with reflectivity 95%.
The gold is deposited onto an incident face of FPER 241 with reflectivity 95% leaving an incident opening.

As shown in FIG. 4 (B), the reference light LBREF enters the incident opening of FPER 241 from the cylindrical lens 242.
The FPER 241 enters with the broadband light as shown in FIG. 4 (A) and (B), and it generates the reference comb light CMBREF.
A frequency interval of the reference comb light CMBREF changes depending on a value of Y-coordinate at the image formation point continuously, wherein the emission direction is the assumed Z-axis direction as shown in FIG. 4 (A), (B) and FIG. 5 (A).
Thus the reference comb light CMBREF is a comb light with a width in the X-axis direction, wherein the frequency interval of the reference comb light CMBRE depends on Y-coordinate.
This frequency interval is represented in Δω(Y).

The detective surface of the photo detector 26 is shown in FIG. 5 (B).
Also, the component depending on Y-coordinate included in the light from FPER 241 (reference comb light CMBRE) is imaged on the detective surface of the photo detector 26 by the cylindrical lens 243 as shown in FIG. 5 (C) in practice.
In FIG. 5 (C), the image formation occurs on the detective surface of the photo detector 26.
However, the image formation occurs in the central part of the detective surface, but the image formation may not occur in the part except a central part of the detective surface.
In this case, calibration can be performed appropriately. As shown in FIG. 5 (A), Y-coordinate of the figure corresponds to Y-coordinate on Y-axis (depth direction) in the detective surface of the photo detector 26.

As shown in FIG. 6, Fourier transform of series representing the comb light provides an autocorrelation function.
The x-axis of the autocorrelation function represents time.
The time can be converted into distance (depth for the measurement) .
When the reference comb light and the measuring light interfere, it is understood that the interfered reference comb light is a reflected light from depth corresponding to value of the autocorrelation function.

Now, as shown in the autocorrelation function of FIG. 6, a peak of a different order is assigned to 1 pixel.
Thus, as shown in FIG. 7 (A), (B), a plurality of the interferences in the different order (the interferences in the different depth) occur.
However, in this situation it is not identified whether interference which accrued to pixel is interference concerning which degree.
Thus, in the present embodiment, it is done as described below, and degree of peak can be identified.

For example, in a condition where an interference accrues to a certain pixel in the detective surface, the reference optical path length is supposed to have changed only ΔL.
Then the image based on the interference moves to plus or minus a direction of axial corresponding to depth over a detective surface. This moved distance corresponds to a number of pixels.
When the reference the optical path changed only a constant short distance, the moved distances of pixels that the interference is generated are different by an order of the autocorrelation function.
Thus, the order of the interference which occurred to pixel is detected if the moved distance corresponding to order is known beforehand.

Note that FIG. 8 (A) shows a position of a sample mirror on the detective surface when the optical path is not changed (zero order interference).
In this state, the frequency interval Δω(Y) depending on Y-coordinate changes when the glass plate 291 is inserted into the reference light path, wherein an emission direction is assumed to Z-axis direction.

FIG. 8 (B) shows a pixel line, wherein the pixel line appears on a detective surface when an optical path was changed. In FIG. 8 (B), the pixel line is an interference image of the second order, and it moves for 2 pixels from an original position.
FIG. 8 (C) shows a pixel line, wherein the pixel line appears on a detective surface when an optical path was changed. In FIG. 8 (C), the pixel line is an interference image of the fourth order, and it moves for 8 pixels from an original position.
FIG. 8 (D) shows a pixel line, wherein the pixel line appears on a detective surface when an optical path was changed. In FIG. 8 (D), the pixel line is an interference image of the seventh order, and it moves for 15 pixels from an original position.

FIG. 9 shows an example, wherein the interference images are superposed (displayed multiple) on a detective surface of the photo detector 26.
In FIG. 9, the interference images are images in the different depth regions that appeared on the detective surface of the photo detector 26.
FIG. 9 (A) shows an example, wherein the glass plate 291 is not inserted into the reference light path.
FIG. 9 (B) shows an example, wherein the glass plate 291 is inserted into the reference light path.
A moving distance of the interference image is different corresponding to the order. This is understood by comparing FIG. 9 (A) and FIG. 9 (B).
Therefore, if the optical path length is changed one time or several times, the interference images of the different order can be separated.

In the embodiment, the optical path length of the reference light LBREF was changed. However, in the present invention, the optical path of the measuring beam LBMSR can be changed.
Note that the optical path can be changed by moving one of the mirrors 271,272 at least.

Now, in the shape measurement device of the present invention, the measurement may not be performed when the depth for the measurement is deep (when the value of Y-axis is big).
Alternatively, the measurement may not be performed when the depth for the measurement belongs to one of the especial zones.
FIG. 10 (A) and FIG. 10 (B) are figures to describe these problems.
For instance, In FIG. 10 (A), the interference location (Y-coordinate of the detective surface) of the photo detector 26 is determined by a point P of the intersection of zero order line F0, primary line F1, secondary line F2, ... and the reflection face S (or the transmission face). Thus, the region (the region G1 in FIG. 10 (A)) where the intersecting point P can not exist becomes non-feeling region.
On the contrary, in the region (the region G2 in FIG. 10) that the reflection face S (or the transmission face) intersects a plurality of lines, the same reflect face S appears in the detective surface as the different order at the same time.
On the contrary, in the region (the region G2 in FIG. 10 (B)) where the plane of the reflection face S (or the transmission face) intersects a plurality of lines, two interferences of the different order appear in the detective surface at the same time.

To solve these problems a spatial distance modulated modulator 4 can be used as shown in FIG. 11 (A), (B).
The modulator 4 shown in FIG. 11 (A), (B) comprises an optical path modulation element 411 (the section is wedge-shaped), a planoconvex cylindrical lens 412, a biconvex cylindrical lens 413.
The stairs are formed on one face or both faces of the optical path modulation element 411.
The optical path length can be modulated depending on the Y-coordinate level by using modulator 4.
Also, an orientation of zero order line F0, primary line F1, secondary line F2, ... can be changed when the optical path modulation element 411 is moved to the upper direction or to the lower direction as shown in FIG. 11 (A), (B).
As shown in FIG. 10 (C), the outbreak of the region G1 becoming non-feeling and the region G2 where the reflection face S (or the transmission face) intersects a plurality of lines can be thereby prevented.
The Non-feeling field can be lost as shown in FIG. 10 (C) by increasing optical path length.
Also, inconvenience that the same interference image appears in the detective surface as different degree at the same time can dissolve.
Note that, on the optical path of the reference comb light or on the optical path of measuring beam, a mechanism to select two modes shown in Fig. 11 (A) or (B) can be provided (it is not illustrated).
For the mode shown in Fig. 11 (A) and the mode shown in Fig. 11 (B), the same optical path modulation element 411 is used.
Also, a characteristic of the modulator 4 can be set appropriately.
For example, as shown in FIG. 11 (C), a surface of the optical path modulation element 411 is curved, and a curved surface is a surface that steps are formed.
The slant of each line indicating an order number thereby decreases when the values of Y-coordinate increase.
Thus, the non-feeling field disappears.

FPER 241 includes a function to modulate an optical path length as shown in FIG. 10 (A) and FIG. 10 (B).
This optical path changes for two-steps or continuously as shown in FIG. 12 (A), (B).
This change is produced by applying a voltage (D/C or A/C) on both sides of FPER 241.
In FIG. 12 (A), the power source E is variable.
In FIG. 12 (B), a power source E turns on or turns off by switch SW.

According to the present invention, as the reference comb light separator 24, a virtually imaged phased array (VIPA) 247 shown in FIG. 13 (A) can be used.
FIG. 13 (B) shows the regions becoming immeasurable (non-feeling region) generates and the regions where the same reflection appears in a detective surface as interference lights of the different order at the same time.
Thus when VIPA 247 is used, a problem same as using FPER 241 occurs.
Such a problem can be dissolved by using the modulator 4 shown in FIG. 11.
The voltage can be applied between both sides of VIPA 247 shown in FIG. 12, and the region changes so that the problem is dissolved.
FIG. 14 (A) shows a state of regions becoming immeasurable (non-feeling region).
Also, FIG. 14 (B) shows a state of regions where the same reflect object appears in a detective surface as interference lights of the different order at the same time.

FIG. 15 is an explanatory drawing showing another embodiment of the shape measurement device of the present invention.
The shape measurement device 2B of the present embodiment can measure one-dimensional tomogram of a depth direction.
A constitution of the shape measurement device of FIG. 15 is the basically same as a constitution of the shape measurement device of FIG. 3.
Note that, in FIG. 15 a lens 231 (condensing lens) used in a measuring light irradiation system 23 is a sphere lens.

FIG. 16 is an explanatory drawing shown the other embodiment of the shape measurement device of the present invention.
A shape measurement device 3 comprises a light source 31, a coupler 32, a measuring light irradiating system 33 (comprising a cylindrical lens 331 and a measuring object 332), a reference comb light separator 34 (comprising FPER 341 and a cylindrical lens 342,343), an optical multiplexer 35, a photo detector 36, a collimator 37, 38 and an optical path length modifier 39 (comprising a phase modulator) in FIG. 16.
An operation of the shape measurement device 3 of the present embodiment is the basically same as movement of the shape measurement device 2A of FIG. 3, too.

Note that, with the present invention, various kinds of profiles of the measuring object 232 can be measured by analyzing spectrum of the measuring light LBMSR.

### DENOTATION OF REFERENCE NUMERALS

1 or 2A, 2B, 3 shape measurement device
11, 21, 31 light source
12, 22 optical divider
13, 23, 33 measuring light irradiating system
14, 24, 34 comb light separator
15, 25, 35 optical synthesizing device
16, 26, 36 photo detector
28 beam diameter adjustment system
29, 39 optical path length modifier
32 couplers
37 collimator
231,242,331,342,412 cylindrical lens
232,332 measuring object
241,341 FPER
271,272 mirror
281 spherical lens
291 glass plate
292 glass plate transfer device
411 optical path modulation element
413 convex cylindrical lens
CMB REF comb light
LB laser beam
LBMSR measuring light
LBREF reference light

## Claims

1. A shape measurement device that an interference image emerging in a detective surface of a detecting element is a two-dimensional tomogram of a measuring object comprising:
a light source generating a broadband light;
a measuring light irradiation system which irradiates a measuring object with a broadband light as a measuring light;
a reference comb light separator which enters the broadband light and emits a reference comb light separated from the broadband light, wherein a frequency interval of the reference comb light changes depending on a size of Y-coordinate level in a image formation point continually and the reference comb light has a width in X-axis direction;
a light synthesizer synthesizing the reference comb light emitted by the reflected light reflected and the reference comb light separator by the measuring object, or synthesizing the transmitted light penetrating the measuring object and the reference comb light emitted by the reference comb light separator;
a photodetector which inputs a synthetic light from the optical multiplexer and detects an optical power in the detective surface;
wherein X-axis is defined as a virtual cutout line of a measurement object, a Y-coordinate is defined as a depth of cutting and a positive direction of a Z-axis is defined as an emission direction of a measurement light.

2. A shape measurement device according to claim 1 comprising:
a modulator which performs spatial distance modulation of a reference comb light on an optical path of a reference comb light.

3. A shape measurement device according to claim or 2:
wherein the photodetector superposes the interference images in different depth regions in on the detective surface, and acquires the superimposed interference image.

4. A shape measurement device according to claim 1-3:
Wherein an optical path length of the reference comb light or the optical path length of the measuring light is changed one time or several times, thereby the interference image moves for a short distance, by detecting the moved distance the interference images of different depth regions are separated.

5. A shape measurement device according to claim 1-4:
wherein the reference comb light separator is optical resonator.

6. A shape measurement device according to claim 5:
wherein the optical resonator is Fabry-Perot etalon resonator.(FPER)

7. A shape measurement device that an interference image emerging in a detective surface of a detecting element is a one-dimensional tomogram of a measuring object comprising:
a light source generating broadband light;
a measuring light irradiation system which irradiates a measuring object with a broadband light as a measuring light;
a reference comb light separator which enters the broadband light and emits a reference comb light separated from the broadband light, wherein a frequency interval of the reference comb light changes depending on a size of Y-coordinate level in a image formation point continually and the reference comb light has a width in X-axis direction;
a light synthesizer synthesizing the reference comb light emitted by the reflected light reflected and the reference comb light separator by the measuring object, or synthesizing the transmitted light penetrating the measuring object and the reference comb light emitted by the reference comb light separator;
a photodetector which inputs a synthetic light from the optical multiplexer and detects an optical power in the detective surface;
wherein a Y-coordinate is defined as a depth of cutting and a positive direction of a Z-axis is defined as an emission direction of a measurement light.

8. A shape measurement device according to claim 7 comprising:
a modulator which performs spatial distance modulation of a reference comb light on an optical path of a reference comb light.

9. A shape measurement device according to claim 7 or 8:
wherein the photodetector superposes the interference line images in different depth regions in on the detective surface, and acquires the superimposed interference image.

10. A shape measurement device described according to claim 7-9:
wherein an optical path length of the reference com light or the optical path length of the measuring light is changed one time or several times, thereby the interference line image moves for a short distance, by detecting the moved distance the interference line images of different depth regions are separated.

11. A shape measurement according to claim 7-10:
wherein the reference comb light separator is optical resonator.

12. A shape measurement device described in claim 11:
wherein the optical resonator is Fabry-Perot etalon resonator.

13. A shape measurement method that an interference image emerging in a detective surface of a detecting element is a two-dimensional tomogram of a measuring object comprising the steps of:
(a) irradiating a broadband light as measuring light to the measuring object;
(b) entering a broadband light, separating a reference comb light and emitting the reference comb light, wherein a frequency interval of the reference comb light changes depending on a size of Y-coordinate level in a image formation point continuously and the reference comb light has a width in X-axis direction;
(c) synthesizing a reflected light reflected by the measuring object or a transmitted light penetrating the measuring object and the reference comb light;
(d) detecting an optical power in the detective surface;
wherein X-axis is defined as a virtual cutout line of a measurement object, a Y-coordinate is defined as a depth of cutting and a positive direction of a Z-axis is defined as an emission direction of a measurement light.

14. A shape measurement method defined by claim 13 comprising:
(e) modulating spatial distance of a reference comb light.

15. A shape measurement method defined by claim 13 or 14,
wherein the interference images are superposed in different depth regions in on the detective surface, and the superimposed interference image is acquired.

16. A shape measurement method defined by 13-15:
wherein an optical path length of the reference comb light or the optical path length of the measuring light is changed one time or several times, thereby the interference image moves for a short distance, by detecting the moved distance the interference images of different depth regions are separated.

17. A shape measurement method that an interference line image emerging in a detective surface of a detecting element is a one-dimensional tomogram of a measuring object comprising the steps of:
(a) irradiating a broadband light as measuring light to the measuring object;
(b) entering the broadband light, separating a reference comb light and emitting the reference comb light, wherein a frequency interval of the reference comb light changes depending on a size of Y-coordinate level in a image formation point continuously;
(c) synthesizing a reflected light reflected by the measuring object or a transmitted light penetrating the measuring object and the reference comb light;
(d) detecting an optical power in the detective surface;
wherein a Y-coordinate is defined as a depth of cutting and a positive direction of a Z-axis is defined as an emission direction of a measurement light.

18. A shape measurement method defined by claim 17 comprising:
(e) modulating spatial distance of a reference comb light.

19. A shape measurement method defined by claim 18,
wherein the interference images are superposed in different depth regions in on the detective surface, and the superimposed interference image is acquired.

20. A shape measurement method defined by claim 17-19:
wherein an optical path length of the reference comb light or the optical path length of the measuring light is changed one time or several times, thereby the interference image moves for a short distance, by detecting the moved distance the interference images of different depth regions are separated.
